# EUROPÄISCHE PATENTSCHRIFT

(11) **EP 1 456 266 B1**
(45) Veröffentlichungstag und Bekanntmachung des Hinweises auf die Patenterteilung: **01.08.2012**
(21) Anmeldenummer: 02798333.7
(22) Anmeldetag: 13.12.2002
(51) Int. Cl.: C08G 18/10, C08G 18/72, C09J 175/04

(54) **REAKTIVE POLYURETHANE MIT EINEM GERINGEN GEHALT AN MONOMEREN DIISOCYANATEN**
REACTIVE POLYURETHANES HAVING A LOW CONTENT OF MONOMERIC DIISOCYANATES
POLYURETHANES REACTIFS A FAIBLE TENEUR EN DI-ISOCYANATES MONOMERES

(30) Priorität: 22.12.2001 DE 10163857
(43) Veröffentlichungstag der Anmeldung: 15.09.2004
(73) Patentinhaber: Henkel AG & Co. KGaA, 40589 Düsseldorf (DE)
(72) Erfinder: KREBS, Michael, 40724 Hilden (DE)
(86) Internationale Anmeldenummer: PCT/EP2002/014223
(87) Internationale Veröffentlichungsnummer: WO 2003/055929

(56) Entgegenhaltungen:
- WO-A-01/40342
- WO-A-99/24486
- DE-A- 19 700 014
- US-A- 6 133 415

## Beschreibung

Die vorliegende Erfindung betrifft reaktive Polyurethan-Zusammensetzungen mit einem geringen Gehalt an monomeren Diisocyanaten, sowie ein Verfahren zu deren Herstellung und deren Verwendung in reaktiven ein- und zweikomponentigen Kleb-/Dichtstoffen, Montageschäumen, Vergußmassen sowie in Weich-, Hart- und Integralschäumen.

Reaktive Polyurethan-Kleb-/Dichtstoffe, insbesondere einkomponentigfeuchtigkeitshärtende Systeme, enthalten in der Regel bei Raumtemperatur flüssige Polymere mit Urethangruppen, ggf. Harnstoffgruppen und reaktiven Isocyanatgruppen. Für viele Anwendungsfälle sind diese Zusammensetzungen lösungsmittelfrei und sehr hochviskos und/oder pastös, sie werden bei Raumtemperatur oder bei leicht erhöhter Temperatur zwischen etwa 50°C und etwa 100°C verarbeitet.

Reaktive, einkomponentige, feuchtigkeitshärtende Polyurethan-Schmelzklebstoffe sind feuchtigkeitshärtende bzw. feuchtigkeitsvernetzende Klebstoffe, die bei Raumtemperatur fest sind und in Form ihrer Schmelze, d.h. bei Massetemperaturen zwischen etwa 80°C und 140° C als Klebstoff appliziert werden, und deren polymere Bestandteile Urethangruppen sowie reaktionsfähige Isocyanatgruppen enthalten. Durch das Abkühlen dieser Schmelze nach dem Auftrag und Fügen der zu verbindenden Substrat-Teile erfolgt zunächst eine rasche physikalische Abbindung des Schmelzklebstoffes durch dessen Erstarren. Daran schließt sich eine chemische Reaktion der noch vorhandenen Isocyanatgruppen mit Feuchtigkeit aus der Umgebung zu einem vernetzten unschmelzbaren Klebstoff an. Reaktive Schmelzklebstoffe auf der Basis von Isocyanat-terminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert, eine weitere Ausführungsform besteht aus zweikomponentigen lösungsmittelhaltigen oder lösungsmittelfreien Systemen, bei denen die polymeren Bestandteile der einen Komponente Urethangruppen sowie reaktionsfähige Isocyanatgruppen enthalten und, bei den zweikomponentigen Systemen, enthält die zweite Komponente Polymere bzw. Oligomere mit Hydroxylgruppen, Aminogruppen, Epoxigruppen und/oder Carboxylgruppen. Bei diesen zweikomponentigen Systemen werden die lsocyanat-gruppenhaltige Komponente und die zweite Komponente unmittelbar vor der Applikation gemischt, im Normalfall mit Hilfe eines Misch- und Dosiersystems.

Montageschäume werden am Ort ihrer Verwendung erzeugt, man spricht daher auch von einem Ortschaum (DIN 18159), insbesondere handelt es sich hier um feuchtigkeitshärtende Einkomponenten-Systeme. Die zu verschäumende Zusammensetzung befindet sich dabei in der Regel in Einweg-Druckbehältern (Aerosol-Dosen). Diese Schäume aus Polyurethan dienen vor allem im Bauwesen zum Dichten, Dämmen und Montieren, z.B. von Fugen, Dachflächen, Fenstern und Türen.

Reaktive Polyurethan-Kleb-/Dichtstoffe zeichnen sich durch ein sehr hohes Leistungsprofil aus. Daher konnten in den letzten Jahren zunehmend neue Anwendungen für diese Kleb-/Dichtstoffe erschlossen werden. Zusammensetzungen für derartige Klebstoffe und/oder Dichtstoffe sind bereits aus sehr vielen Patentanmeldungen und sonstigen Veröffentlichungen bekannt.

Neben vielen Vorteilen weisen diese Polyurethan-Zusammensetzungen auch einige systembedingte Nachteile auf. Einer der gravierendsten Nachteile ist der Restmonomergehalt an Isocyanaten, insbesondere der flüchtigeren Diisocyanate. Kleb-/Dichtstoffe und insbesondere die Schmelzklebstoffe werden bei erhöhter Temperatur verarbeitet. Die Schmelzklebstoffe werden beispielsweise zwischen 100°C und 200°C verarbeitet, Kaschierklebstoffe zwischen Raumtemperatur und 150°C. Schon bei Raumtemperatur weisen flüchtige Isocyanate wie TDI oder IPDI einen nicht zu vernachlässigenden Dampfdruck auf. Dieser merkliche Dampfdruck ist insbesondere bei einem Sprühauftrag besonders gravierend, da hierbei signifikante Mengen an Isocyanatdämpfen über dem Applikationsobjekt auftreten können, die wegen ihrer reizenden und sensibilisierenden Wirkung toxisch sind. Die Anwendung von Produkten mit einem hohen Gehalt an solchen leichtflüchtigen Diisocyanaten erfordert seitens des Anwenders aufwendige Maßnahmen zum Schutz der das Produkt verarbeitenden Personen, insbesondere aufwendige Maßnahmen zur Reinhaltung der Atemluft, gesetzlich vorgegeben durch die höchstzulässige Konzentration von Arbeitsstoffen als Gas, Dampf oder Schwebstoff in der Luft am Arbeitsplatz (jährlich aktualisierte MAK-Wert-Liste der Technischen Regel TRGS 900 des Bundesministeriums für Arbeit und Soziales). Diese Maßnahmen, wie z.B. die Überwachungspflicht der Einhaltung der maximalen Arbeitsplatzkonzentration sind aufwendig. Insbesondere Absaugungsmaßnahmen der Dämpfe an der Entstehungs- und Austrittsstelle sind sehr kostenintensiv und behindern zudem einige Auftragsverfahren, wie insbesondere den Sprühauftrag der reaktiven Polyurethan-Kleb-/Dichtstoffe. Da die genannten Schutz- und Reinigungsmaßnahmen in der Regel mit hohen finanziellen Investitionen oder Kosten verbunden sind, besteht seitens der Anwender ein Bedürfnis nach Produkten, die einen, in Abhängigkeit vom verwendeten Isocyanat, möglichst niedrigen Anteil an leichtflüchtigen Diisocyanaten aufweisen.

Das Vorhandensein von monomerem, nicht mit Polyol umgesetzten Ausgangs-Diisocyanat führt zu einem Gehalt an freien, monomeren Diisocyanaten in der Verklebung, die häufig beispielsweise innerhalb der Beschichtung oder Verklebung, oder zum Teil auch in die beschichteten oder verklebten Materialien hinein "wandern" können. Solche wandernden Bestandteile werden in Fachkreisen häufig als "Migrate" bezeichnet. Durch Kontakt mit Feuchtigkeit werden die Isocyanatgruppen der Migrate kontinuierlich zu Aminogruppen und weiteren Metaboliten umgesetzt.

In Polyurethan-Integralschäumen, die beispielsweise bei der Herstellung von Lenkrädern in Kraftfahrzeugen verwendet werden, sind diese Migrate unerwünscht, da ein Kontakt der aus den migrierten Diisocyanaten entstandenen Amine mit der Haut nicht auszuschliessen ist.

Auch im Verpackungsbereich, speziell bei Lebensmittelverpackungen, sind Migrate unerwünscht. Einerseits kann die Wanderung der Migrate durch das Verpackungsmaterial hindurch zu einer Kontamination des verpackten Gutes führen, andererseits sind, abhängig von der Menge des migratfähigem freien monomeren Diisocyanates, lange Wartezeiten notwendig, bevor das Verpackungsmaterial "Migrat-frei" ist und verwendet werden darf.

Der Gehalt der durch migrierte Diisocyanate entstehenden Amine, insbesondere der primären aromatischen Amine, muß unter der auf Anilin-hydrochlorid bezogenen Nachweisgrenze von 0,2 Mikrogramm Anilinhydrochlorid/100 ml Probe liegen (Bundesinstitut für gesundheitlichen Verbraucherschutz und Veterinärmedizin, BGW, nach amtlicher Sammlung von Untersuchungsverfahren nach § 35 LMBG - Untersuchung von Lebensmitteln/Bestimmung von primären aromatischen Aminen in wäßrigen Prüflebensmitteln).

Ein weiterer unerwünschter Effekt, der durch die Migration monomerer Diisocyanate hervorgerufen werden kann, ist der sogenannte Antisiegeleffekt bei der Herstellung von Beuteln oder Tragetaschen aus kaschierten Kunststoff-Folien: Häufig sind die kaschierten Kunststoff-Folien mit einem Gleitmittel auf Basis von Fettsäureamiden beschichtet. Durch Reaktion von migriertem monomeren Diisocyanat mit dem Fettsäureamid und/oder Feuchtigkeit werden an der Folienoberfläche Harnstoffverbindungen gebildet, die einen Schmelzpunkt besitzen, der über der Versiegelungstemperatur der Kunststoff-Folien liegen kann. Dadurch entsteht eine artfremde Antisiegel-Schicht zwischen den zu versiegelnden Folienteilen, die einer einheitliche Siegel-Nahtbildung entgegenwirkt.

Für die genannten Anwendungsfelder, wie z.B. reaktive ein- und zweikomponentige Kleb-/Dichtstoffe, Montageschäume, Vergussmasse sowie Weich-, Hart- und Integralschäume ist daher die Entwicklung von reaktiven Polyurethan-Zusammensetzungen mit einem drastisch reduzierten Anteil an monomeren, leicht flüchtigen Diisocyanaten in hohem Maße wünschenswert, da letztere zum Teil erst deren Einsatz bei vielen Applikationen ermöglicht, bei denen der Einsatz aus den oben erläuterten arbeitshygienischen Problemen bisher nicht möglich war. Unter "leichtflüchtig" werden im Rahmen dieser Anmeldung solche Substanzen verstanden, die bei etwa 20°C einen Dampfdruck von mehr als etwa 10⁻⁶ hPa haben. Nach der Schulz-Flory-Statistik ist bei der Umsetzung von Diisocyanaten mit Isocyanatgruppen etwa gleicher Reaktivität mit hydroxylgruppenhaltigen Verbindungen der verbleibende Gehalt an monomerem Diisocyanat im Reaktionsprodukt vom NCO/OH-Verhältnis der Reaktanden bei der Prepolymer-Synthese abhängig. Bei einem NCO/OH-Verhältnis von 2, wie es häufig für die Prepolymerzusammensetzung notwendig ist, verbleiben etwa 25% des eingesetzten monomeren Diisocyanates als Monomer im Prepolymer. Werden bei einer Prepolymer-Synthese z.B. 10 Gew.% Diphenylmethan-diisocyanat (MDI) bei einem NCO/OH-Verhältnis von 2 eingesetzt, so findet man in Übereinstimmung mit der oben genannten statistischen Abschätzung größenordnungsmäßig etwa 2 Gew.% monomeres MDI im Prepolymeren. Bei 150°C hat das reine MDI bereits einen Dampfdruck von 0,8 mbar, in Zusammensetzungen ist dieser Dampfdruck zwar nach Maßgabe des Raoult'schen Gesetzes niedriger, er ist aber immer noch oberhalb des arbeitshygienisch unbedenklichen Bereiches. Unter den oben beschriebenen Applikationsbedingungen, insbesondere bei einer großflächigen Applikation als Schmelzklebstoff in dünner Schicht, gelangen also erhebliche Mengen des Restmonomers in den darüber liegenden Luftraum und müssen durch Absaugung entfernt werden. Eine signifikante Absenkung des Monomergehaltes um eine Zehnerpotenz durch Verringerung des NCO/OH-Verhältnisses ist in der Praxis in aller Regel nicht durchführbar, weil das durchschnittliche Molekulargewicht dann exponentiell ansteigen würde und die daraus resultierenden Polyurethan-Zusammensetzungen extrem hochviskos würden und nicht mehr zu verarbeiten wären. In der Praxis geht man daher bei daher bei der Prepolymer-Synthese auch andere Wege. So wird beispielsweise mit einem ausreichend hohen NCO/OH-Verhältnis synthetisiert und das monomere Diisocyanat nach der Prepolymerisierung in einem zweiten Schritt entfernt, dies kann beispielsweise durch Abdestillieren des nicht umgesetzten monomeren Diisocyanates im Vakuum geschehen oder durch nachträgliche chemische Bindung des monomeren Diisocyanates. So beschreibt die EP-A-316738 ein Verfahren zur Herstellung von Urethangruppen aufweisenden Polyisocyanaten mit einem Urethangruppen-freien Ausgangs-Diisocyanat von maximal 0,4 Gew.% durch Umsetzung von aromatischen Diisocyanaten mit mehrwertigen Alkoholen und anschließender Entfernung des nicht umgesetzten, überschüssigen Ausgangs-Diisocyanats, wobei die destillative Entfernung des überschüssigen Ausgangs Diisocyanat in Gegenwart eines Isocyanatgruppen aufweisenden aliphatischen Polyisocyanats durchgeführt wird.

Gemäß der Lehre der DE 10013186 an das destillative Entfernen der monomeren Isocyanate dadurch vermieden werden, daß in einer ersten Stufe ein Additionsprodukt aus Verbindungen mit zwei isocyanatreaktiven Gruppen mit einem Diisocyanat I umgesetzt wird, wobei entweder das Diisocyanat oder die isocyanatreaktive Verbindung reaktive Gruppen mit unterschiedlicher Reaktivität aufweist. Dabei werden die Verhältnisse von Diisocyanat und isocyanatreaktiver Verbindung equimolar eingestellt, so daß das resultierende Additionsprodukt eine mit Isocyanat reaktive Gruppe und eine freie NCO-Gruppe enthält. Ggf. soll sich eine intermolekulare Additionsreaktion dieses Reaktionsproduktes zu einem Polyadditionsprodukt anschließen, das wiederum eine isocyanatreaktive Gruppe und eine Isocyanatgruppe enthält. Daran schließt sich die Umsetzung mit einem weiteren Diisocyanat II an, das von dem vorgenannten Diisocyanat I verschieden ist.

Die EP-A-118065 beschreibt ein zweistufiges Verfahren Herstellung von Polyurethanprepolymeren mit endständigen Isocyanatgruppen und vermindertem Restmonomergehalt aus Diisocyanaten durch eine erste Umsetzung eines monocyclischen Diisocyanats, vorzugsweise Toluylendiisocyanat oder Isophorondiisocyanat (IPDI) mit einem mehrfunktionellen Alkohol im Verhältnis OH-Gruppen : NCO-Gruppen <1. In dem entstandenen Prepolymeren wird in einem zweiten Schritt ein dicyclisches Diisocyanat, vorzugsweise 4,4'-Diphenylmethandiisocyanat oder 4,4-Dicyclohexylmethandiisocyanat, mit mehrfunktionellen Alkoholen im Verhältnis OH-Gruppen : NCO-Gruppen <1 zur Reaktion gebracht.

Zur Herstellung von Polyurethan-Prepolymeren mit geringem Restmonomergehalt und relativ geringer Viskosität schlägt die EP-A150444 vor, in erster Reaktion Diisocyanate mit Isocyanat-Gruppen unterschiedlicher Reaktivität mit mehrfunktionellen Alkoholen im Verhältnis zwischen 4 und 0.55 umzusetzen. Nach Abreaktion praktisch aller schnellen Isocyanat-Gruppen mit einem Teil der vorhandenen OH-Gruppen, wenn eine Reaktion der weniger reaktiven Gruppen noch nicht stattgefunden hat, soll in einer 2. Reaktionsstufe ein im Vergleich zu den weniger reaktiven Isocyanat-Gruppen des Isocyanats aus Reaktionsschritt 1 reaktiveres Diisocyanat äquimolar oder im Überschuss, bezogen auf noch freie OH-Gruppen, zugesetzt werden. Vorteilhaft sollen dabei übliche Katalysatoren und erhöhte Temperaturen (40-100 °C) angewendet werden. Für die erste Reaktion sollen insbesondere aliphatische oder aromatische asymmetrische, vorzugsweise monocyclische Diisocyanate (Toluylendiisocyanat, Isophorondiisocyanat) eingesetzt werden (Molverhältnis OH- : NCO-Gruppen = 0.6-1.0). Die zweite Reaktion soll sich insbesondere mit aromatischen oder aliphatischen dicyclischen, vorzugsweise symmetrischen Diisocyanaten durchführen lassen, (4,4'-Diphenylmethandiisocyanat, 4,4'-Dicyclohexylmethandiisocyanat) im Molverhältnis OH- : NCO-Gruppen = 0.6-0.8. Als mehrfunktionelle Alkohole sollen primäre oder sekundäre aliphatische Alkohole mit 2-6 OH-Gruppen, insbesondere Diole (C₂-C₅), Triole (C₃-C₆), Tetraole (C₄-C₈), OH-funktionelle Polyester oder Polyether vom Molgewicht bis 10000 dienen. Die Verfahrensprodukte werden zusammen mit üblichen Härtern oder Feuchtigkeit, ggf. in Gegenwart von organischen Lösungsmitteln und Beschleunigern zum Verkleben von Kunststoffgegenständen, insbesondere Folien beansprucht. Die Verklebungstemperaturen sollen zwischen 70 und 120 °C liegen. Als Vorteil wird in den beiden letztgenannten Schriften angegeben, daß bei grossflächiger Anwendung keine Belästigung durch flüchtige monocyclische Diisocyanate erfolge. Bei diesen Temperaturen, und insbesondere bei Applikationstemperaturen von Schmelzklebstoffen von bis zu 160° haben jedoch auch dicyclische aromatische Diisocyanate wie das 4,4'MDI eine nicht zu vernachlässigende Flüchtigkeit.

Die EP-A-0393903 beschreibt ein Verfahren zur Herstellung von Prepolymeren, bei dem in einem ersten Schritt monomeres Diisocyanat mit einem Polyol umgesetzt wird. Anschließend wird ein Katalysator in ausreichender Menge zugegeben, so daß ein erheblicher Teil der restlichen Isocyanat-Funktionalität in Allophanat-Funktionalität übergeführt wird. Nach Erreichen des theoretischen NCO-Gehaltes wird die Reaktion durch rasches Abkühlen und Zusatz von Salicylsäure abgestoppt.

Die WO-95/06124 beschreibt Polyurethan-Zusammensetzungen mit einem niedrigen Anteil an monomeren Diisocyanaten, die durch Umsetzung von Polyolen mit trifunktionellen Isocyanaten und ggf. Zusatz von monofunktionellen Kettenabbrechern hergestellt werden. Nachteilig bei diesem Verfahren ist die geringe Verfügbarkeit von trifunktionellen, niedermolekularen Isocyanaten, insbesondere die trifunktionellen Homologen des Diphenylmethan-diisocyanates sind kommerziell in reiner Form nicht erhältlich.

Gemäß der Lehre der WO 01/40342 können Polyurethan - Zusammensetzungen mit einem niedrigen Gehalt an monomeren Diisocyanaten in einem zweistufigen Verfahren hergestellt werden, wobei in einem ersten Schritt eine Diolkomponente mit einem Molekulargewicht kleiner 2000 und einem monomeren Diisocyanat mit einem Molekulargewicht kleiner als 500 umgesetzt wird. Aus diesem Umsetzungsprodukt wird das nicht umgesetzte monomere Diisocyanat entfernt und in einem zweiten Schritt wird das so entstanden hochmolekulare, monomerarme Diisocyanat mit einem Polyol umgesetzt, so daß ein reaktives Prepolymer mit Isocyanat- Endgruppen entsteht. Gemäß dieser Schrift eignen sich derartige Polyurethan-Zusammensetzungen zur Verwendung als Bindemittel für reaktive Ein- oder zweikomponentige Kleb- / Dichtstoffe, die ggf. lösungsmittelhaltig sein können, weiterhin sollen sich diese Zusammensetzungen bei entsprechender Auswahl der Polyole zur Herstellung von reaktiven Schmelzklebstoffen eignen.

Die noch unveröffentlichte DE 101 32571.1 schlägt zur Herstellung von reaktiven Polyurethanen mit einem geringen Gehalt von monomeren Isocyanaten vor, mindestens ein monomeres, asymmetrisches Diisocyanat mit einem Molekulargewicht von 160 g/mol bis 500 g/mol mit mindestens einem Diol mit einem Molekulargewicht von 50 g/mol bis 2 000 g/mol umzusetzen. Durch die hohe Selektivität der Reaktion sind keine zusätzlichen Aufarbeitungs- und Reinigungsschritte zur Entfernung des überschüssigen Monomers nötig. Diese Umsetzungsprodukte können in einer zweiten Stufe direkt mit höhermolekularen Polyolen zum Endpunkt umgesetzt werden.

Obwohl die Produkte, die nach der Lehre der beiden letztgenannten Schriften herstellbar sind, sehr gute Verarbeitungseigenschaften und einen niedrigen Gehalt an monomeren Diisocyanaten aufweisen, ist es wünschenswert, die Herstellverfahren für monomerenarme reaktive Polyurethanzusammensetzung weiter zu vereinfachen. Hierzu gehören einfache Reaktionsführung, möglichst niedrige Viskosität des Reaktionsproduktes sowie gute Schmelzstabilität der reaktiven Polyurethan - Zusammensetzung.

Die EP 693511 A1 beschreibt Isocyanatgruppen enthaltende reaktive Hotmelt Systeme. Diese Zusammensetzungen sind Reaktionsprodukte von Hydroxypolyolen mit Ester- und / oder Ethergruppierungen der Hydroxylzahl von 15 bis 150 mit einer mittleren Funktionalität von 1,95 bis 2,2 mit Diphenylmethandilsocyanaten in einem Verhältnis von Isocyanatgruppen in den Diphenylmethandiisocyanaten zu Hydroxylgruppen in den Polyolen von 1,4:1 bis 2,5:1, wobei das Diphenylmethandiisocyanat (MDI) einen Gehalt von mindestens 70 Gew. % an 2,4'-Diphenylmethandiisocyanat aufweist. Gemäß der Lehre dieser Schrift weisen diese Umsetzungsprodukte eine niedrige Anfangsviskosität und eine erhöhte Temperaturstabilität (Schmelzstabilität) auf, so daß sie sich als Fest-Klebstoffe für die verschiedensten Einsatzgebiete eignen sollen. Angaben über den Rest-Gehalt an monomeren Diisocyanaten dieser Produkte werden in der Schrift nicht gemacht.

Die WO 99/24486 beschreibt ein Polyurethanbindemittel mit einem niedrigen Gehalt an leichtflüchtigen Isocyanat-Gruppen tragenden Monomeren. Dieses enthält zwei unterschiedliche Komponenten A und B, wobei das PU-Prepolymer A mindestens zwei unterschiedliche Arten von gebundenen Isocyanat-Gruppen aufweist, die eine unterschiedliche Reaktivität zeigen. Die zweite Komponente B der Mischung enthält Isocyanat-Gruppen, die eine höhere Reaktivität aufweisen als die in der Komponente A enthaltenen Isocyanat-Gruppen mit geringer Reaktivität. Dabei werden Insbesondere symmetrische Isocyanate als Komponente B beschrieben.

Die noch unveröffentlichte DE 10150722.4 lehrt daß Umsetzungsprodukte aus 2,4'-Diphenylmethandiisocyanat mit einem Anteil von mindestens 95 Gew. % an 2,4'-Isomeren mit mindestens einem Polyetherpolyol und / oder Polyalkylenglycol mit einem Molekulargewicht unter 1 000 und / oder einem kristallinen oder teilkristallinen oder glasartig amorphem Polyesterpolyol sowie ggf. bei Raumtemperatur flüssigen Polyesterpolyolen und / oder Polyetherpolyolen mit Molekulargewichten über 1 000 sich zu Klebstoff - Zusammensetzungen umsetzen lassen, die einen sehr geringen Gehalt an monomerem Diisocyanat von weniger als 0,5, vorzugsweise weniger als 0,25 Gew. % aufweisen. Derartige Schmelzklebstoff - Zusammensetzungen weisen nach diesen Angaben zusätzlich zu dem niedrigen Gehalt an monomeren Diisocyanat eine hohe Schmelzstabilität und eine niedrige Viskosität auf. Angaben zu flüssigen oder hochviskos pastösen Polyurethan- Kleb- oder Dichtstoffen oder Schaumstoffen mit niedrigem Restmonomergehalt werden in dieser Schrift nicht gemacht.

Trotz des vorgenannten Standes der Technik besteht also weiterhin Bedarf an verbesserten Polyurethan-Zusammensetzungen mit einem niedrigen Anteil an monomeren Diisocyanaten, die sich für den Einsatz als Kleb-/Dichtstoffe, Schäume und reaktive Schmelzklebstoffe eignen. Dabei sollen insbesondere die eingesetzten Rohstoffe leicht und kostengünstig zugänglich sein und sich leicht umsetzen lassen und die Anwendungseigenschaften wie Haftverhalten, Applizierbarkeit, Härtungsgeschwindigkeit dem der konventionellen reaktiven Polyurethan- (Schmelz)klebstoffe, -Dichtstoffe, -Montageschäume, -Vergußmassen und dergleichen zumindest ebenbürtig sein. Die Erfinder haben sich daher die Aufgabe gestellt, Polyurethan-Zusammensetzungen bereitzustellen, die die letztgenannten Probleme lösen können,

Die erfindungsgemäße Lösung der Aufgabe ist den Patentansprüchen zu entnehmen. Sie besteht im Wesentlichen in der Bereitstellung von reaktiven Polyurethan-Zusammensetzungen, die herstellbar sind durch Umsetzungen von Polyolen mit einem stöchiometrischen Überschuß von Mischungen aus asymmetrischen Polyisocyanaten mit einem Molekulargewicht unter 500 ausgewählt als Diphenylmethan-2,4'-diisocyanat(2,4'-MOI) mit einen gehalt am 4,4'-MOI und 2,2'-MOI von kleiner als 10% und hochmolekularen Polyisocyanaten.

Ein weiterer Gegenstand der vorliegenden Erfindung ist ein Verfahren zur Herstellung von Polyurethan-Prepolymeren mit reaktiven NCO-Gruppen mit niedrigem Gehalt an Polyisocyanaten mit einem Molekulargewicht (MW) unter 500, bei dem
a) in einem ersten Reaktionsschritt als asymmetrische(n) Polyisocyanate(e) ausgewählt als Diphenylmethan-2,4'-diisocyanat(2,4'-MOI) mit einen gehalt am 4,4'-MOI und 2,2'-MOI von kleiner als 10% mit Polyolen im Verhältnis NCO: OH zwischen 0,25 und 1,8 : 1 umgesetzt werden und
b) nach Abreaktion praktisch aller höherreaktiven Gruppen des / der asymmetrischen Polyisocyanate(s) aus Reaktionsschritt (a) dieser Reaktionsmischung ein hochmolekulares Polyisocyanat in stöchiometrischer Äquivalenz zu den verbleibenden OH-Gruppen oder vorzugsweise im stöchiometrischen Überschuß zugesetzt wird und die Reaktion ggf. durch Zusatz von Katalysatoren und / oder durch Zufuhr von Wärme vervollständigt wird.

Ein weiterer Gegenstand der vorliegenden Erfindung ist die Verwendung der nach dem vorgenannten Verfahren hergestellten Polyurethan-Prepolymeren zur Herstellung von reaktiven ein- oder zweikomponentigen Klebstoffen, Dichtstoffen, Schmelzklebstoffen, lösungsmittelfreien / lösungsmittelhaltigen Kaschierklebstoffen, Montageschäumen, Vergußmassen, Weich-, Hart-, und / oder Integralschäumen.

In dem ersten Reaktionsschritt wird also die selektive Reaktion der asymmetrischen Polyisocyanate ausgenutzt.

Unter selektiver Reaktion wird eine Umsetzung der monomeren asymmetrischen Diisocyanate mit den Diolen unter möglichst schonenden Bedingungen verstanden, damit der Reaktivitätsunterschied der beiden NCO-Gruppen im Sinne einer maximalen Selektivität ausgenutzt werden kann.

Monomere asymmetrische Diisocyanate im Sinne dieser Erfindung sind daher solche aromatischen, aliphatischen oder cycloaliphatischen Diisocyanate mit einem Molekulargewicht von 160g/mol bis 500g/mol, die NCO-Gruppen mit einer unterschiedlichen Reaktivität gegenüber Diolen besitzen. Die unterschiedliche Reaktivität der NCO-Gruppen des Diisocyanates entsteht durch unterschiedlich benachbarte Substituenten zu den NCO-Gruppen am Molekül, die beispielsweise durch sterische Abschirmung die Reaktivität der einen NCO-Gruppe im Vergleich zur anderen NCO-Gruppe herabsetzen und/oder durch unterschiedliche Bindung einer NCO an den Molekülrest, beispielsweise in Form einer primären oder sekundären NCO-Gruppe.

Beispiele für aromatische asymmetrische Diisocyanate sind alle Isomeren des Toluylendiisocyanats (TDI) entweder in isomerenreiner Form oder als Mischung mehrerer Isomerer, Naphthalin-1,5-diisocyanat (NDI), Naphthalin-1,4-diisocyanat (NDI), Diphenylmethan-2,4'-diisocyanat (MDI) sowie Mischungen des 4,4'-Diphenylmethandiisocyanats mit dem 2,4'-MDI-Isomeren und 1,3-Phenylendiisocyanat. Beispiele für geeignete cycloaliphatische asymmetrische Diisocyanate sind z.B. 1-Isocyanatomethyl-3-isocyanato-1,5,5-trimethylcyclohexan (Isophorondiisocyanat, IPDI), 1-Methyl-2,4-diisocyanato-cyclohexan, 1,4-Diisocyanato-2,2,6-trimethylcyclohexan (TMCDI), oder Hydrierungsprodukte der vorgenannten aromatischen Diisocyanate, insbesondere hydriertes MDI in isomerenreiner Form, bevorzugt hydriertes 2,4'-MDI.Beispiele für aliphatische asymmetrische Diisocyanate sind 1,6-Diisocyanato-2,2,4-trimethylhexan, 1,6-Diisocyanato-2,4,4-trimethylhexan und Lysindiisocyanat. Zur Herstellung der Zusammensetzung gemäß vorliegender Erfindung wird als asymmetrisches Diisocyanat das 2,4'-Diphenylmethan-diisocyanat (2,4'-MDI) mit einem Gehalt an 4,4'-MDI und 2,2'-MDI von kleiner 10 %, bevorzugt von kleiner 5 % und insbesondere bevorzugt von kleiner 1 % besonders bevorzugt eingesetzt. Insbesondere liegt der Gehalt an 2,2'MDI unter 0,4 %.

Die selektive Reaktion der monomeren asymmetrischen Diisocyanate mit den Polyolen erfolgt bei einer Temperatur zwischen 20 °C bis 100 °C, bevorzugt zwischen 25 - 80 °C und insbesondere bevorzugt zwischen 40 - 75 °C.

Als Polyole können dabei eine Vielzahl von höhermolekularen Polyhydroxyverbindungen verwendet werden. Als Polyole eignen sich vorzugsweise die bei Raumtemperatur flüssigen, glasartig fest/amorphen oder kristallinen Polyhydroxyverbindungen mit zwei bzw. drei Hydroxylgruppen pro Molekül im Molekulargewichts-Bereich von 400 bis 20000, vorzugsweise im Bereich von 1000 bis 6000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole (Poly(oxytetramethylen)glycol, Poly-THF), die z.B. durch die saure Polymerisation von Tetrahydrofuran hergestellt werden, dabei liegt der Molekulargewichts-Bereich der Polytetramethylenglykole zwischen 600 und 6000, vorzugsweise im Bereich von 800 bis 5000.

Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure,Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit Hydroxy-funktionellen Acrylsäure- und/oder Methacrylsäure-Verbindungen wie Hydroxyethyl(meth)-acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Die Auswahl des Polyols oder der Polyole richtet sich dabei nach der Verwendungsart dieser Kleb-/Dichtstoff-Zusammensetzung. Bei hochviskosen oder pastösen flüssigen Kleb-/Dichtstoffen werden vorzugsweise zumindest überwiegend flüssige Polyole eingesetzt. Bei zweikomponentigen Kleb-/Dichtstoffen kann dabei die eine Komponente ein Prepolymer mit reaktiven Isocyanat-Endgruppen aus den Polyolen enthalten und die zweite Komponente ein hydroxyfunktionelles Polyol oder hydroxyfunktionelles Polyurethan. Es kann aber auch das hochmolekulare Diisocyanat als Härter für eine hydroxyfunktionelle Komponente verwendet werden, wobei die hydroxyfunktionelle Komponente entweder eines oder mehrerer der vorgenannten Polyole oder ein hydroxylgruppenhaltigen Polyurethanprepolymer enthält.

Bei der Verwendung der erfindungsgemäßen Polyurethan-Zusammensetzungen als reaktive Schmelzklebstoffe werden die Polyolkomponenten so ausgewählt, daß die Zusammensetzung bei Raumtemperatur fest ist. Dies kann einerseits dadurch geschehen, daß feste amorphe und/oder feste kristalline Polyhydroxyverbindungen eingesetzt werden, es kann jedoch auch dadurch geschehen, daß ein erheblicher Anteil an kurzkettigen Polyhydroxyverbindungen mit verwendet wird, da durch die hohe Konzentration an Urethangruppierungen diese Zusammensetzungen ebenfalls bei Raumtemperatur fest sind. Auswahlkriterien für die Polyole finden sich z.B. in dem vorgenannten Aufsatz von H. F. Huber und H. Müller.

Hochmolekulare Diisocyanate im Sinne dieser Anmeldung sind solche Diisocyanate, die durch Umsetzung eines Diols mit einem durchschnittlichen Molekulargewicht von 60 bis 2000 mit einem monomeren Diisocyanat mit einem Molekulargewicht kleiner als 500 im stöchiometrischen Überschuß der Diisocyanate gegenüber den OH-Gruppen herstellbar sind, dabei können diese hochmolekularen Diisocyanate nach einem Verfahren hergestellt werden, wie es in der WO 01/40342 auf Seite 5, letzter Absatz bis Seite 9, 3. Absatz bzw. den Ansprüchen 7 bis 9 beschrieben wird. Die Lehre der WO 01/40342 in Bezug auf die Herstellung von hochmolekularen Polyisocyanaten ist ausdrücklich Bestandteil der vorliegenden Anmeldung. In einer bevorzugten Ausführungsform werden zur Herstellung der hochmolekularen Diisocyanate die vorgenannten asymmetrischen Diisocyanate verwendet. Auf diese Weise kann die selektive Reaktion der monomeren asymmetrischen Diisocyanate mit den Diolen mit einem Molekulargewicht unterhalb 2000 ebenfalls voll ausgenutzt werden, so daß bei geeigneten stöchiometrischen Verhältnissen und geeigneter Reaktionsführung (niedriger Überschuß an monomerem Diisocyanat, niedrige Reaktionstemperatur, Verzicht auf den Zusatz von Katalysatoren) das Synthesegemisch der hochmolekularen Polyisocyanate nur einen geringen Anteil an monomerem niedermolekularen Diisocyanat aufweist. In einem solchen Fall kann auf die durch die Lehre der WO 01/40342 empfohlenen Reinigungsschritte zum Entfernen des monomeren Diisocyanates verzichtet werden. Hierdurch gestaltet sich das Herstellverfahren gemäß vorliegender Erfindung besonders wirtschaftlich.

Die zur Herstellung der hochmolekularen Diisocyanate verwendeten Diole haben ein durchschnittliches Molekulargewicht (Zahlenmittel Mn) zwischen 60 und 2000, vorzugsweise kleiner als 1500. Maßgeblich für das Zahlenmittel ist die OH-Zahl des Diols, bestimmt nach DIN 53240.

Grundsätzlich können hierfür alle linearen oder schwach verzweigten C2-C18-Alkandiole verwendet werden. Weiterhin können die niedermolekularen Polyether verwendet werden sowie niedermolekulare Alkoxylierungsprodukte von aromatischen Dihydroxyverbindungen (Diphenolen).

Konkrete Beispiele für die erfindungsgemäß zu verwendenden Diole sind Ethylenglycol, 1,2-Propandiol, 1,3-Propandiol, 2,2-Dimethyl-1,3-propandiol, 2-Methylpropandiol, 1,6-Hexandiol, 2,4,4-Trimethylhexandiol-1,6, 2,2,4- Trimethylhexandiol-1,6, 1,4-Cyclohexandimethanol, Diethylenglycol, Triethylenglycol, Tetraethylenglycol, Dipropylenglycol, Tripropylenglycol, Tetrapropylenglycol, Poly(oxytetramethylen)glycol mit einem Molekulargewicht bis zu 650, Alkoxylierungsprodukte des Bisphenols A, Alkoxylierungsprodukte des Bisphenols F, der isomeren Dihydroxyanthracene, der isomeren Dihydroxynaphthaline, des Brenzkatechins, des Resorcins, des Hydrochinons mit bis zu 8 Alkoxy-Einheiten pro aromatischer Hydroxygruppe oder Mischungen der vorgenannten Diole.

Wie aus den vorstehenden Ausführungen deutlich geworden ist, gibt es zwei Möglichkeiten, die erfindungsgemäßen reaktiven Polyurethan-Zusammensetzungen herzustellen:

in der einen Variante werden in einem ersten Reaktionsschritt (a) das oder die asymmetrischen Polyisocyanat(e) mit Polyolen im Verhältnis NCO:OH zwischen 0,25 und 1,8: 1 umgesetzt, so daß ein OH-funktionelles Zwischenprodukt entsteht, das dann mit einem hochmolekularen Diisocyanat gemäß der Lehre der WO 01/40342 zu einem Isocyanat terminierten Prepolymer oder Prepolymergemisch weiter umgesetzt wird.

In einer zweiten, besonders bevorzugten Ausführungsform wird dieser zweite Reaktionsschritt (b) mit hochmolekularen Diisocyanaten ausgeführt, die, wie vorstehend ausgeführt, unter Verwendung von asymmetrischen Diisocyanaten hergestellt wurden, so daß kein Reinigungsschritt zum Entfernen der monomeren Diisocyanate notwendig wird. Ganz besonders eignet sich als asymmetrisches Diisocyanat das 2,4'-MDI mit hoher Isomerenreinheit von oberhalb 90 %, vorzugsweise oberhalb 95%, ganz besonders bevorzugt oberhalb von 97,5 Gew.% an 2,4'-MDI, wobei der Gehalt an 2,2'-MDI unterhalb von 0,4 % liegen sollte.

Diese zweite Ausführungsform kann auch als sogenannte "Eintopfreaktion" durchgeführt werden. Dabei werden äquimolare Mengen an asymmetrischem Diisocyanat und hochmolekulares Diisocyanat gemeinsam mit dem oder den Polyol(mischungen) umgesetzt. Wegen der Unterschiede der Reaktivität der "schnellen" NCO-Gruppen des asymmetrischen Diisocyanats im Vergleich zu denen des hochmolekularen Diisocyanats wird der gleiche erfindungsgemäße Effekt der drastischen Absenkung des Monomergehalts im Umsetzungsprodukt erzielt.

Durch diese Verfahren lassen sich Polyurethan-Zusammensetzungen herstellen, deren Restmonomergehalt deutlich unter 0,1 Gew. % liegt.

Die erfindungsgemäßen Zusammensetzungen können ggf. zusätzlich Katalysatoren enthalten, die die Bildung des Polyurethanprepolymeren bei seiner Herstellung beschleunigen und/oder die die Feuchtigkeitsvernetzung nach der Applikation des Kleb-/Dichtstoffes beschleunigen. Als erfindungsgemäß einsetzbare Katalysatoren eignen sich z.B. die metallorganische Verbindungen des Zinns, Eisens, Titans oder Wismuts wie Zinn(II)salze von Carbonsäuren, z.B. Zinn-II-acetat, -ethylhexoat und -diethylhexoat verwendet werden. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(ß-methoxycarbonylethyl)zinndilaurat und Bis(ß-acetyl-ethyl)zinndilaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(ß-methoxycarbonyl-ethyl)zinndidodecylthiolat, Bis(ß-acetyl-ethyl)zinn-bis(2-ethyl-hexylthiolat), Dibutyl- und Dioctylzinndidodecylthiolat, Butyl- und Octylzinn-tris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)_{3-n'} wobei R eine Alkylgruppe mit 4 bis 8 C-Atomen ist, Bis(ß-methoxycarbonyl-ethyl)zinn-bis(thioethylenglykol-2-ethylhexoat), Bis(β-methoxycarbonyl-ethyl)-zinn-bis(thioglykolsäure-2-ethylhexoat), und Bis(ß-acetyl-ethyl)zinn-bis(thioethy-lenglykol-2-ethylhexoat) und Bis(β-acetyl-ethyl)zinn-bis(thioglykolsäure-2-ethylhexoat.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Aminogruppen. Konkret genannt seien: Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan (DABCO), Triethylamin, Dimethylbenzylamin (Desmorapid DB, BAYER), Bis-dimethylaminoethylether (Catalyst A 1, UCC), Tetramethylguanidin, Bis-dimethylaminomethyl-phenol, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorbornane, oder auch ungesättigte bicyclische Amine, z. B. Diazabicycloundecen (DBU) sowie Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin. Die Katalysatoren können auch in oligomerisierter oder polymerisierter Form vorliegen, z.B. als N-methyliertes Polyethylenimin.

Ganz besonders bevorzugte Katalysatoren sind jedoch die Derivate des Morpholins. Konkrete Beispiele für geeignete Morpholino-Verbindungen sind Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon oder N-Morpholinopropyl-N'-methyl-piperazin, Dimorpholinodiethylether (DMDEE) oder Di-2,6-dimethylmorpholinoethyl)ether.

Die vorgenannten Morpholin-Derivate weisen eine besonders hohe katalytische Aktivität, insbesondere der Wasser- (Feuchtigkeits-) Isocyanat-Reaktion, auf. Deshalb sind bereits sehr niedrige Katalysatorkonzentrationen hocheffizient für Vernetzung bzw. Aushärtung der Klebstoffe, die Konzentrationen des Katalysators in der Klebstoff-Formulierung können zwischen 0,001 und 2 Gew.%, vorzugsweise zwischen 0,02 und 0,9 Gew.% liegen.

Weiterhin kann die erfindungsgemäße Zusammensetzung ggf. zusätzlich Stabilisatoren, haftvermittelnde Zusätze wie klebrigmachende Harze, Füllstoffe, Pigmente, Weichmacher und/oder Lösungsmittel enthalten.

Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des Polyurethanprepolymers aus Polyesterbausteinen, können Hydrolyse-Stabilisatoren, z.B. vom Carbodiimid-Typ, eingesetzt werden.

Die erfindungsgemäßen Zusammensetzungen können weiterhin haftungsverstärkende Zusätze enthalten, bevorzugt sind hier haftungsverstärkende, migrationsfähige Polyisocyanate, die einen wesentlich niedrigeren Dampfdruck als das MDI aufweisen. Der Zusatz derartiger haftungsverstärkenden Polyisocyanate ist der WO 01/40342 auf Seite 14 bis 16 beschrieben. Die Lehre dieser Vorgehensweise ist ausdrücklich Bestandteil der vorliegenden Erfindung.

Werden die erfindungsgemäßen Zusammensetzungen als Schmelzklebstoffe, Kleb-/Dichtstoffe, Vergußmassen, Weich-, Hart- oder Integralschäume eingesetzt, so können diese noch klebrigmachende Harze, wie z.B. Abietinsäure, Abietinsäureester, Terpenharze, Terpenphenolharze oder Kohlenwasserstoffharze sowie Füllstoffe (z.B. Silikate, Talk, Calciumcarbonate, Tone oder Ruß), Weichmacher (z.B. Phthalate) oder Thixotropiermittel (z.B. Bentone, pyrogene Kieselsäuren, Harnstoffderivate, fibrillierte oder Pulp-Kurzfasern) oder Farbpasten bzw. Pigmente enthalten.

Bei der Verwendung als Kaschierklebstoff kann zum Erreichen bestimmter zusätzlicher Eigenschaften, wie thermischer und chemischer Beständigkeit, noch ein Zusatz von Epoxidharzen, Phenolharzen, Novolaken, Resolen oder Melaminharzen und ähnliches notwendig sein. Außerdem können in diesem Falle die reaktiven Polyurethan-Zusammensetzungen auch in Lösung hergestellt werden, vorzugsweise in polaren, aprotischen Lösungsmitteln. Die bevorzugten Lösungsmittel haben dabei einen Siedebereich von etwa 50°C bis 140°C. Obwohl auch halogenierte Kohlenwasserstoffe geeignet sind, werden ganz besonders Ethylacetat, Methylethylketon (MEK) oder Aceton bevorzugt.

Die erfindungsgemäßen reaktiven Polyurethane und die daraus hergestellten reaktiven Polyurethan-Zusammensetzungen werden in reaktiven ein- und zweikomponentigen Kleb-/Dichtstoffen, Montageschäumen, Vergussmassen sowie in Weich-, Hart- und Integralschäumen verwendet. Die Verwendung geschieht beispielsweise wie bei üblichen bekannten Polyurethan-Kleb-/Dichtstoffe als reaktiver ein- oder zweikomponentiger Kleb-/Dichtstoff, als reaktiver Schmelzklebstoff oder als lösungsmittelhaltiger Klebstoff in ein- oder zweikomponentiger Form. Wesentlicher Vorteil gegenüber den bekannten reaktiven ein- und zweikomponentigen Kleb-/Dichtstoffen, Montageschäumen, Vergussmassen sowie Weich-, Hart- und Integralschäumen ist der signifikant niedrige Anteil an arbeitshygienisch bedenklichen und migrationsfähigen monomeren Diisocyanaten mit einem Molekulargewicht unterhalb 500g/mol. Ein weiterer Vorteil gegenüber bekannten monomerarmen reaktiven Polyurethanen ist wirtschaftlicher Art, da die Monomerarmut ohne aufwendige und kostspielige Aufarbeitungsschritte erzielt wird. Durch die schonende, selektive Reaktion werden reaktive Polyurethane erhalten, die beispielsweise frei sind von den üblicherweise bei thermischen Aufarbeitungsschritten anfallenden Nebenprodukten wie Vernetzungs- oder Depolymerisationsprodukten. Durch die selektive Reaktion asymmetrischer Diisocyanate mit sekundären Diolen werden sterisch abgeschirmte reaktive Polyurethane erhalten, die Polyurethan-Schmelzklebstoffe mit ausgezeichneter Schmelzstabilität ergeben.

Nachfolgend soll die Erfindung an Hand einiger Prinzipversuche dargestellt werden, wobei die Auswahl der Beispiele keine Beschränkung des Umfanges des Erfindungsgegenstandes darstellen soll. Sie zeigen nur modellhaft die Wirkungsweise der erfindungsgemäß herzustellenden Schmelzklebstoffe und ihre Vorteile in Bezug auf niedrigen Restmonomergehalt, Haftungsverhalten sowie niedrige Viskosität und Schmelzstabilität. Derartige Schmelzklebstoffe können für eine Vielzahl von Verklebungs- Anwendungen eingesetzt werden. Ihr Auftrag erfolgt in konventioneller Weise im Sprühauftrag, mit Hilfe von Auftragswalzen, Rakeln und dergleichen.

In den nachfolgenden Beispielen sind alle Mengenangaben, Gewichtsprozente bzw. Gewichtsteile, wenn nicht anders angegeben.

### Beispiele

Es wurden verschiedene reaktive Polyurethan-Zusammensetzungen hergestellt und auf ihre Anwendungstechnischen Eigenschaften überprüft. Die Ergebnisse sind in der unten stehenden Tabelle zusammengefasst.

### Beispiel 1: (Stand der Technik)

Ein Polyesterdiol mit der OH-Zahl 30 aus Dodecandisäure und Hexandiol (Dynacoll 7380, Fa. Degussa-Hüls) wurde bei 130 °C mit reinem 4,4'-MDI bis zur Reaktionskonstanz umgesetzt.

### Beispiel 2 (Vergleich)

Gemäß der Lehre der WO 01/40342 wurde zunächst aus einem Polypropylenglycol (Diol) mit Mn 750 bei einem NCO/OH-Verhältnis von 5,0 mit 4,4'-MDI umgesetzt. Das überschüssige MDI wurde im Dünnschichtverdampfer bis auf einen Wert auf unter 0,1 Gew. % entfernt. Anschließend wurde dieses hochmolekulare Diisocyanat mit dem Polyesterdiol Dynacoll 7380 umgesetzt.

### Beispiel 3 (Vergleich)

Gemäß der Lehre der noch unveröffentlichten DE 101 507 22.4 wurde reines 2,4'-MDI, Gehalt an 2,4'-Isomerem über 97,5% mit Dynacoll 7380 umgesetzt.

### Beispiel 4 (erfindungsgemäß)

Ein äquimolares Gemisch aus 2,4'-MDI und hochmolekularem MDI (hergestellt wie im Beispiel 2) wurden mit Dynacoll 7380 bei 130 °C umgesetzt.

| Beispiel | NCO/OH | Viskosität bei 130 °C | Offene Zeit | Abbindezeit | MDI-Monomergemisch |
|---|---|---|---|---|---|
| 1 | 2,2 | 7400 mPas | 20 s | < 5 S | 3,2 % |
| 2 | 2,2 | 19400 mPas | 85 s | 55 s | < 0,1 % |
| 3 | 2,2 | 2400 mPas | 15 s | < 5 s | 2,3 % |
| | 1,6 | 6800 mPas | 20 s | < 5 s | 0,3 % |
| 4 | 2,0 | 8600 mPas | 25 s | < 5 s | < 0,1 % |
| | | | | | |

Die Zusammensetzung gemäß Beispiel 1 nach Stand der Technik weist zwar gute Verarbeitungseigenschaften im Hinblick auf offene Zeit, niedrige Abbindezeit und niedrige Verarbeitungsviskosität auf, nachteilig ist jedoch der sehr hohe MDI-Monomergehalt von 3,2 Gew. %. Die Zusammensetzung gemäß Beispiel 2 weist zwar einen sehr niedrigen Monomergehalt von 0,1 % auf, nachteilig sind jedoch die hohe Schmelzviskosität sowie die sehr lange offene Zeit und die sehr lange Abbindezeit. Die Zusammensetzung gemäß Beispiel 3 weist bei einem NCO/OH-Verhältnis von 2,2 eine sehr niedrige Viskosität auf, hat erwünschtermaßen eine sehr kurze Abbindezeit und eine sehr kurze offene Zeit, hiermit können also schnelle Produktionsverfahren durchgeführt werden, nachteilig ist jedoch der immer noch recht hohe Monomergehalt von 2,3 %. Erniedrigt man das NCO/OH-Verhältnis im Sinne der Lehre der noch unveröffentlichten DE 101 507 22.4, so wird der Monomergehalt drastisch auf 0,1 % abgesenkt, Abbindezeit und offene Zeit sind in einem günstigem Bereich für sehr viele Anwendungen und die Schmelzviskosität ebenfalls in einem sehr günstigen Bereich für die meisten Applikationen.

Das erfindungsgemäße Beispiel 4 zeigt, daß diese Zusammensetzungen eine gute Schmelzviskosität für fast alle Anwendungen aufweist, offene Zeit und Abbindezeit sind ebenfalls in einem sehr günstigen Bereich, zusätzlich ist der Monomergehalt gegenüber der Variante des Beispiels 3 noch einmal signifikant weiter abgesenkt.

## Patentansprüche

1. Reaktive Polyurethan-Zusammensetzungen herstellbar durch Umsetzungen von Polyolen mit einem stöchiometrischen Überschuß von Mischungen aus i) Diphenylmethan-2,4'-diisocyanat (2,4'-MDI) mit einem Gehalt an 4,4'-MDI und 2,2'-MDI von kleiner als 10% und ii) hochmolekularen Polyisocyanaten, ausgewählt aus Umsetzungsprodukten aus Diolen mit einem durchschnittlichen Molekulargewicht (Zahlenmittel Mn) von 60 bis 2000 mit einem monomeren Diisocyanat mit einem des Molekulargewicht kleiner als 500.

2. Reaktive Polyurethan-Zusammensetzung nach Anspruch 1, **dadurch gekennzeichnet, dass** die eingesetzten hochmolekularen Diisocyanate vor deren Umsetzung mit dem / den Polyol(en) maximal 10 Gew. % monomeres Diisocyanat enthalten.

3. Reaktive Polyurethan-Zusammensetzungen nach Anspruch 1 bis 2, **dadurch gekennzeichnet, daß** das asymmetrische Diisocyanat Diphenylmethan-2,4'-diisocyanat (2,4'-MDI) mit einem Gehalt von 4,4'-MDI und 2,2'MDI kleiner als 2,5% ist.

4. Reaktive Polyurethan-Zusammensetzungen nach Anspruch 1, **dadurch gekennzeichnet, daß** die Diole mit einem Molekulargewicht von 60 bis 2000 ausgewählt werden aus der Gruppe der C2- bis C18-Alkandiole einschließlich der Isomeren wie z.B. Ethylenglycol, 1,2-Propandiol, 1,3-Propandiol, 2,2-Dimethyl-1,3-propandiol, 2-Methylpropandiol, 1,6-Hexandiol, 2,4,4-Trimethylhexandiol-1,6, 2,2,4- Trimethylhexandiol-1,6, 1,4-Cyclohexandimethanol, Diethylenglycol, Triethylenglycol, Tetraethylenglycol, Dipropylenglycol, Tripropylenglycol, Tetrapropylenglycol, Poly(oxytetramethylen)glycol mit einem Molekulargewicht bis zu 650. Alkoxylierungsprodukte des Bisphenols A, Alkoxylierungsprodukte des Bisphenols F, der isomeren Dihydroxyanthracene, der isomeren Dihydroxynaphthaline, des Brenzkatechins, des Resorcins, des Hydrochinons mit bis zu 8 Alkoxy-Einheiten pro aromatischer Hydroxygruppe oder Mischungen der vorgenannten Diole.

5. Reaktive Polyurethan-Zusammensetzungen nach Anspruch 1 bis 4, **dadurch gekennzeichnet, daß** als Polyol ein oder mehrere di- oder trifunktionelle Polyethylenglycole, Polypropylenglycole, statistische oder Blockcopolymere aus Ethylenoxid und Propylenoxid, Poly(oxytetramethylen)glycole, lineare oder verzweigte Polyesterpolyole, Poly-ε-Caprolactone, hydroxyfunktionelle Polybutadiene oder deren Hydrierungsprodukte, hydroxyfunktionelle Poly(meth)acrylate oder Mischungen der vorgenannten Polyole verwendet wird, wobei das Zahlenmittel der Molmasse des/der Polyol(e) 400 bis 20000, vorzugsweise 1000 bis 6000 beträgt.

6. Verfahren zur Herstellung von Polyurethan-Prepolymeren mit reaktiven NCO-Gruppen mit niedrigem Gehalt an monomeren Polyisocyanaten mit einem Molekulargewicht unter 500 nach einem der Ansprüche 1 bis 5, **dadurch gekennzeichnet, daß**
(a) in einem ersten Reaktionsschritt als asymmetrische Polyisocyanate Diphenylmethan-2,4'-diisocyanat (2,4'-MDI) mit einem Gehalt an 4,4'-MDI und 2,2'-MDI von kleiner als 10% mit Polyolen nach Anspruch 5 im Verhältnis NCO:OH zwischen 0,25 und 1,8:1 umgesetzt werden
(b) nach Abreaktion praktisch aller höher reaktiven NCO-Gruppen des/der asymmetrischen Polyisocyanate aus Reaktionsschritt (a) hochmolekulares Polyisocyanat in stöchiometrischer Äquivalenz zu den verbleibenden OH-Gruppen oder vorzugsweise zu stöchiometrischen Überschuß zugesetzt wird und die Reaktion ggf. durch Zusatz von Katalysatoren und / oder durch Zufuhr von Wärme vervollständigt wird.

7. Verfahren nach Anspruch 6 dadurch gekennenzeichnet, daß das OH: NCO-Verhältnis im Schritt (b) 0,4 bis 0,7 : 1 beträgt.

8. Verfahren nach Anspruch 6, **dadurch gekennzeichnet, daß** die beiden Reaktionsschritte (a) und (b) bei Temperaturen zwischen 40 °C und 130 °C, vorzugsweise zwischen 60 °C und 110 °C durchgeführt werden.

9. Verfahren nach Anspruch 6 **dadurch gekennzeichnet, daß** der Reaktionsschritt (a) bei Temperaturen zwischen 40 °C und 80 °C und ohne Zusatz von Katalysatoren durchgeführt wird.

10. Verwendung der reaktiven Polyurethan-Zusammensetzung nach mindestens einem der Ansprüche 1 bis 9 zur Herstellung reaktiver ein- oder zweikomponentiger Kleb-/Dichtstoffe.

11. Verwendung der reaktiven Polyurethan-Zusammensetzung nach Anspruch 10 zur Herstellung reaktiver Schmelzklebstoffe und lösungsmittelfreier oder lösungsmittelhaltiger Kaschierklebstoffe.

12. Verwendung der reaktiven Polyurethan-Zusammensetzung nach mindestens einem der Ansprüche 1 bis 11 zur Herstellung von Montageschäumen, Vergussmassen sowie Weich-, Hart- und Intagralschäumen.

## Claims

1. Reactive polyurethane compositions producible by reacting polyols with a stoichiometric excess of mixtures of i) diphenylmethane 2,4'-diisocyanate (2,4'-MDI) with a 4,4'-MDI and 2,2'-MDI content of less than 10% and ii) high molecular weight polyisocyanates, selected from reaction products prepared from diols with an average molecular weight (number average Mn) of 60 to 2000 with a monomeric diisocyanate with a molecular weight of less than 500.

2. A reactive polyurethane composition according to claim 1, **characterised in that**, prior to being reacted with the polyol(s), the high molecular weight diisocyanates used contain at most 10 wt.% of monomeric diisocyanate.

3. Reactive polyurethane compositions according to claims 1 to 2, **characterised in that** the asymmetric diisocyanate is diphenylmethane 2,4'-diisocyanate (2,4'-MDI) with a 4,4-MDI and 2,2'-MDI content of less than 2.5%.

4. Reactive polyurethane compositions according to claim 1, **characterised in that** the diols with a molecular weight of 60 to 2000 are selected from the group of C2- to C10-alkanediols including isomers, such as for example ethylene glycol, 1,2-propanediol, 1,3-propanediol, 2,2-dimethyl-1,3-propanediol, 2-methylpropanediol, 1,6-hexanediol, 2,4,4-trimethyl-1,6-hexanediol, 2,2,4-trimethyl-1,6-hexanediol, 1,4-cyclohexanedimethanol, diethylene glycol, triethylene glycol, tetraethylene glycol, dipropylene glycol, tripropylene glycol, tetrapropylene glycol, poly(oxytetramethylene) glycol with a molecular weight of up to 650, alkoxylation products of bisphenol A, alkoxylation products of bisphenol F, isomeric dihydroxyanthracenes, isomeric dihydroxynaphthalenes, pyrocatechol, resorcinol, hydroquinone with up to 8 alkoxy units per aromatic hydroxyl group or mixtures of the above-stated diols.

5. Reactive polyurethane compositions according to claims 1 to 4, **characterised in that** the polyol used is one or more di- or trifunctional polyethylene glycols, polypropylene glycols, random or block copolymers of ethylene oxide and propylene oxide, poly(oxytetramethylene) glycol, linear or branched polyester polyols, poly-ε-caprolactones, hydroxy-functional polybutadienes or the hydrogenation products thereof, hydroxy-functional poly(meth)acrylates or mixtures of the above-stated polyols, wherein the number average molar mass of the polyol(s) amounts to 400 to 20000, preferably 1000 to 6000.

6. A method for producing polyurethane prepolymers with reactive NCO groups with a low content of monomeric polyisocyanates with a molecular weight of below 500 according to any one of claims 1 to 5, **characterised in that**
(a) in a first reaction step, diphenylmethane 2,4'-diisocyanate (2,4'-MDI) with a 4,4'-MDI and 2,2'-MDI content of less than 10% is reacted as asymmetric polyisocyanates with polyols according to claim 5 in an NCO:OH ratio of between 0.25 and 1.8:1
(b) once virtually all the relatively highly reactive NCO groups of the asymmetric polyisocyanate(s) from reaction step (a) have been consumed by reaction, high molecular weight polyisocyanate is added in an stoichiometrically equivalent amount, or preferably in stoichiometric excess, to the remaining OH groups and the reaction is taken to completion optionally by addition of catalysts and/or by input of heat.

7. A method according to claim 6, **characterised in that** the OH:NCO ratio in step (b) amounts to 0.4 to 0.7:1.

8. A method according to claim 6, **characterised in that** both of reaction steps (a) and (b) are carried out at temperatures of between 40°C and 130°C, preferably of between 60°C and 110°C.

9. A method according to claim 6, **characterised in that** reaction step (a) is carried out at temperatures of between 40°C and 80°C and without addition of catalysts.

10. Use of the reactive polyurethane composition according to at least one of claims 1 to 9 for producing reactive single- or two-component adhesives/sealants.

11. Use of the reactive polyurethane composition according to claim 10 for producing reactive hot-melt adhesives and solvent-free or solvent-containing laminating adhesives.

12. Use of the reactive polyurethane composition according to at least one of claims 1 to 11 for producing installation foams, encapsulation compounds as well as flexible, rigid and integral foams.

## Revendications

1. Compositions réactives de polyuréthanes, que l'on peut préparer par des mises en réaction de polyols avec un excès stoechiométrique de mélanges i) du diphénylméthane-2,4'-diisocyanate (2,4'-MDI) possédant des teneurs en 4,4'-MDI et en 2,2'-MDI inférieures à 10 % et ii) de polyisocyanates à poids moléculaire élevé choisis parmi des produits réactionnels de diols possédant un poids moléculaire moyen (moyenne en nombre Mn) de 60 à 2.000 avec un diisocyanate monomère dont le poids moléculaire est inférieur à 500.

2. Composition réactive de polyuréthane selon la revendication 1, **caractérisée en ce que** les diisocyanates à poids moléculaire élevé mis en oeuvre contiennent, avant leur mise en réaction avec le/les polyols, du diisocyanate monomère au maximum à concurrence de 10 % en poids.

3. Compositions réactives de polyuréthanes selon les revendications 1 à 2, **caractérisées en ce que** le diisocyanate asymétrique est le diphénylméthane-2,4'-diisocyanate (2,4'-MDI) possédant des teneurs en 4,4'-MDI et en 2,2'-MDI inférieures à 2,5 %.

4. Compositions réactives de polyuréthanes selon la revendication 1, **caractérisées en ce que** les diols possédant un poids moléculaire de 60 à 2.000 sont choisis parmi le groupe des alcane(en C₂-C₁₈)diols, y compris les isomères, tels que par exemple l'éthylèneglycol, le 1,2-propanediol, le 1,3-propanediol, le 2,2-diméthyl-1,3-propanediol, le 2-méthylpropanediol, le 1,6-hexanediol, le 2,4,4-triméthylhexanediol-1,6, le 2,2,4-triméthylhexanediol-1,6, le 1,4-cyclohexanediméthanol, le diéthylèneglycol, le triéthylèneglycol, le tétraéthylèneglycol, le dipropylèneglycol, le tripropylèneglycol, le tétrapropylèneglycol, le poly(oxytétraméthylène)-glycol dont le poids moléculaire s'élève jusqu'à 650, des produits d'alcoxylation du bisphénol A, des produits d'alcoxylation du bisphénol F, des dihydroxyanthracènes isomères, des dihydroxynaphtalènes isomères, du pyrocatéchol, du résorcinol, de l'hydroquinone contenant jusqu'à 8 unités alcoxy par groupe hydroxyle aromatique, ou des mélanges des diols susmentionnés.

5. Compositions réactives de polyuréthanes selon les revendications 1 à 4, **caractérisées en ce qu'**on utilise, à titre de polyol, un ou plusieurs membres du groupe comprenant des polyéthylèneglycols difonctionnels ou trifonctionnels, des polypropylèneglycols, des copolymères statistiques ou séquencés d'oxyde d'éthylène et d'oxyde de propylène, des poly(oxytétraméthylène)glycols, des polyesterpolyols linéaires ou ramifiés, des poly-ε-caprolactones, des polybutadiènes hydroxyfonctionnels ou leurs produits d'hydrogénation, des poly(méth)acrylates hydroxyfonctionnels ou des mélanges des polyols susmentionnés, la moyenne en nombre de la masse molaire du/des polyols s'élevant de 400 à 20.000, de préférence de 1.000 à 6.000.

6. Procédé pour la préparation de prépolymères de polyuréthanes contenant des groupes NCO réactifs possédant une faible teneur en polyisocyanates monomères d'un poids moléculaire inférieur à 500, selon l'une quelconque des revendications 1 à 5, **caractérisé en ce que**
(a) dans une première étape réactionnelle, on fait réagir, à titre de polyisocyanates asymétriques, du diphénylméthane-2,4'-diisocyanate (2,4'-MDI) possédant des teneurs en 4,4'-MDI et en 2,2'-MDI inférieures à 10 % avec des polyols selon la revendication 5 dans le rapport NCO:OH entre 0,25 et 1,8:1,
(b) après la mise en réaction de pratiquement tous les groupes NCO à réactivité supérieure du/des polyisocyanates asymétriques obtenus à l'étape réactionnelle (a), on ajoute du polyisocyanate à poids moléculaire élevé en une équivalence stoechiométrique par rapport aux groupes OH qui subsistent ou de préférence en un excès stoechiométrique, et on complète la réaction de manière facultative par addition de catalyseurs et/ou par apport de chaleur.

7. Procédé selon la revendication 6, **caractérisé en ce que** le rapport OH:NCO à l'étape (b) s'élève de 0,4 à 0,7:1.

8. Procédé selon la revendication 6, **caractérisé en ce qu'**on effectue les deux étapes réactionnelles (a) et (b) à des températures entre 40 °C et 130 °C, de préférence entre 60 °C et 110 °C.

9. Procédé selon la revendication 6, **caractérisé en ce qu'**on effectue l'étape réactionnelle (a) à des températures entre 40 °C et 80 °C et sans addition de catalyseurs.

10. Utilisation de la composition réactive de polyuréthane selon au moins une des revendications 1 à 9, pour la préparation d'adhésifs/agents d'étanchéité réactifs à un ou deux composants.

11. Utilisation de la composition réactive de polyuréthane selon la revendication 10, pour la préparation d'adhésifs thermofusibles réactifs et d'adhésifs de contrecollage exempts de solvant ou contenant des solvants.

12. Utilisation de la composition réactive de polyuréthane selon au moins une des revendications 1 à 11, pour la préparation de mousses de montage, de matières de coulage ainsi que de mousses tendres, dures et intégrées.
